# EUROPEAN PATENT SPECIFICATION

(11) **EP 3 315 286 B1**
(45) Date of publication and mention of the grant of the patent: **08.05.2019**
(21) Application number: 15897077.2
(22) Date of filing: 27.08.2015
(51) Int. Cl.: B29C 49/02, B29C 49/42, B29C 49/70, B29C 49/06, B29C 49/08, B29C 49/36, B29C 45/00, B29C 45/76, B29L 31/00

(54) **METHOD FOR MOLDING CONTAINER USING INJECTION STRETCH BLOW MOLDING MACHINE**
VERFAHREN ZUR FORMUNG EINES BEHÄLTERS MITTELS SPRITZSTRECKBLASFORMMASCHINE
PROCÉDÉ DE MOULAGE DE RÉCIPIENT AU MOYEN D'UNE MACHINE DE MOULAGE PAR INJECTION-SOUFFLAGE AVEC ÉTIRAGE

(30) Priority: 30.06.2015 JP 2015131657
(43) Date of publication of application: 02.05.2018
(73) Proprietor: A.K. TECHNICAL LABORATORY, INC.,, Hanishina-gun, Nagano-ken 389-0603 (JP)
(72) Inventor: AOKI, Shigeto, Nagano 389-0603 (JP); MATSUZAKA, Naohide, Nagano 389-0603 (JP); HASEGAWA, Kazuhide, Nagano 389-0603 (JP)
(74) Representative: Leitner, Waldemar
(86) International application number: PCT/JP2015/004328
(87) International publication number: WO 2017/002150

(56) References cited:
- EP-A2- 0 426 096
- WO-A1-2007/139226
- JP-A- 2000 318 022
- JP-A- 2015 077 795
- US-A- 4 941 816
- US-A1- 2004 105 912

## Description

### Technical Field

The present invention relates to a method for molding a container using an injection stretch blow molding machine, the molding method capable of reducing a molding cycle.

### Background Art

Injection stretch blow molding machines are conventionally provided as molding machines that perform molding of preforms from pellets of a raw material, and subsequent molding of containers (for example bottle-shaped containers) from the preforms as products, in series.

### (Summary Of Conventional Molding Machine)

As an aspect of the injection stretch blow molding machine described above, there is a molding machine in which primary three units, i.e., an injection molding unit that molds a preform by injection of a molten resin from an injection device, a stretch blow molding unit that stretches the preform, while blowing air thereinto, to the shape of a product, and an ejection unit that sends the container formed by the stretch blow molding unit out of the molding machine are disposed in three directions in the single molding machine.

Lip molds for molding mouth portions of the containers are provided in three positions of a rotating plate, in order to transfer a molded article from the injection molding unit to the stretch blow molding unit, and transfer another molded article from the stretch blow molding unit to the ejection unit. Turning the rotating plate circularly moves the lip molds among the injection molding unit, the stretch blow molding unit, and the ejection unit, thus facilitating continuous production of containers.

### (Injection Molding Unit)

### (Rotating Plate Turning Step)

The operation of the aforementioned injection molding unit of the injection stretch blow molding machine will be schematically described. The rotating plate described above turns at 120 degrees in an intermittent manner . The 120-degree turn of the rotating plate in a rotating plate turning step circularly moves the lip molds by a rotation angle of 120 degrees about a rotation axis of the rotating plate. The injection molding unit has a lower mold, i.e., a cavity mold disposed on the side of the injection device of the molding machine, and an upper mold disposed above the lower mold movably in a vertical direction.

### (Rotating Plate Fixing Step)

After the rotating plate turns at 120 degrees, a rotating plate fixing step is performed in which the rotating plate is temporarily stopped and fixed in its position without being turned. By stopping the turn of the rotating plate, the lip mold that has been moved by the circular movement in a direction orthogonal to the ascent and descent direction of the upper mold of the injection molding unit is situated in a position corresponding to the injection molding unit.

### (Upper Mold And Lower Mold Clamping Step)

After the aforementioned rotating plate fixing step, an upper mold and lower mold clamping step is performed. The rotating plate having the lip mold that is situated in the position corresponding to the injection molding unit descends so that the lip mold is overlaid on the aforementioned lower mold. The upper mold also descends through the lip mold. The upper mold and the lower mold are clamped (closed) in a state of disposing the lip mold therebetween to form an injection mold, and a high-pressure clamping force is applied thereto.

### (Molten Resin Feeding Step)

After the high-pressure clamping force is applied to the injection mold, a molten resin feeding step is performed in which a molten resin is injected into the injection mold to mold a preform.

### (Upper Mold And Lower Mold Opening Step)

After the preform is molded, an upper mold and lower mold opening step is performed. The upper mold ascends so as to strip out of the lip mold, and the upper mold and the lower mold are opened. The rotating plate ascends from the side of the lower mold, so that the preform the mouth portion of which is held by the lip mold of the rotating plate is released from the lower mold.

Next, after the ascent, the rotating plate turns 120 degrees and stops again. By the stop of the rotating plate after the turn, the aforementioned lip mold that has been situated in the position corresponding to the injection molding unit is now situated in a position corresponding to the stretch blow molding unit, i.e., the station for the next molding. One of the other lip molds that has been situated in the position corresponding to the stretch blow molding unit is now situated in a position corresponding to the ejection unit. The remaining one of the lip molds that has been situated in the position corresponding to the ejection unit is now situated in the position corresponding to the injection molding unit. This operation corresponds to the rotating plate turning step and the rotating plate fixing step, which are described above.

### (Stretching Blow Molding Unit)

In the stretch blow molding unit, the rotating plate descends while holding the preform with the aforementioned lip mold. The descent operation of the rotating plate at this time corresponds to the descent operation of the rotating plate in the upper mold and lower mold clamping step in the aforementioned injection molding unit. The lip mold is fitted from above onto blow molds in a clamped state to dispose the preform inside the blow molds . A high-pressure clamping force is applied to the blow molds, and thereafter a container is molded as a product by stretching using a stretch rod and blowing.

After that, opening of the blow molds and an ascent of the rotating plate release the blow-molded container from the blow molds in a state of being held by the lip mold. The ascent operation of the rotating plate at this time corresponds to the ascent operation of the rotating plate in the upper mold and lower mold opening step in the injection molding unit.

Next, after the ascent described above, the rotating plate turns at 120 degrees and stops again. By the stop, the aforementioned lip mold that has been situated in the position corresponding to the stretch blow molding unit is now situated in the position corresponding to the next station, i.e., the ejection unit. One of the other lip molds that has been situated in the position corresponding to the ejection unit is now situated in the position corresponding to the next station, i.e., the injection molding unit. The remaining one of the lip molds that has been situated in the position corresponding to the injection molding unit is now situated in the position corresponding to the next station, i.e., the stretch blow molding unit. This operation corresponds to the rotating plate turning step and the rotating plate fixing step, which are described above.

### (Ejection Unit)

In the aforementioned ejection unit, the lip mold is opened to release the mouth portion of the blow-molded container. The container, i.e., the product is sent out of the molding machine, and the lip mold is clamped (closed) again. As described above, since the lip molds circularly move so as to be sequentially situated in the positions corresponding to the injection molding unit, the stretch blow molding unit, and the ejection unit, the containers are molded continuously.

When molding the containers using the conventional injection stretch blow molding machine, as described above, it is desired to reduce a molding cycle by shortening operation time required for the injection molding unit, to increase production efficiency.

### Citation List

### Patent Literature

Patent Literature 1: Japanese Patent Application Laid-Open No. Hei. 03-142220, family member of EP0426096A2, and US4941816A as well as US2004/105912A1 for the related technical background.

### Summary of Invention

### Technical Problem

However, it is difficult for the above-described conventional injection stretch blow molding machine to reduce operation time required for the aforementioned injection molding unit. This will be described below in detail.

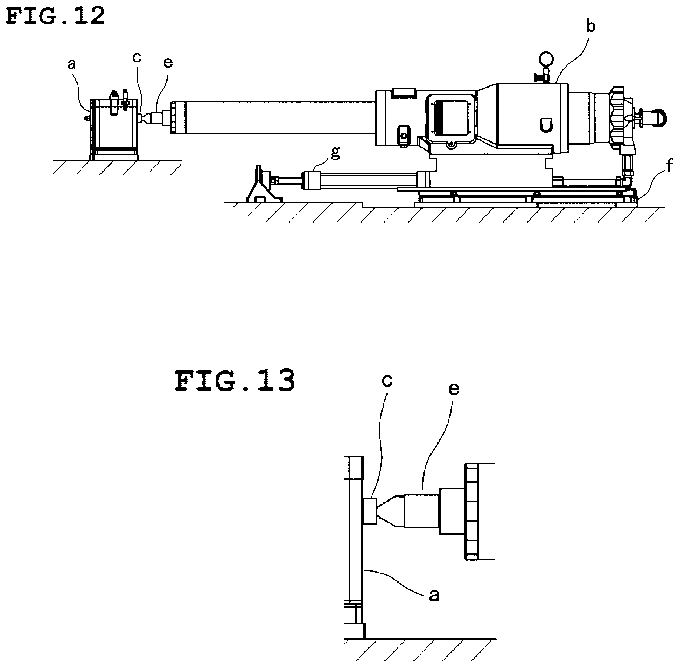

FIGS. 12 and 13 show a hot runner device a and an injection device b, which are incorporated in a lower portion of the aforementioned lower mold of the injection molding unit of the injection stretch blow molding machine. A nozzle e of the injection device b is caused to abut a resin injection port d of a main nozzle c of the hot runner device a. The injection device b itself is movably disposed on a table through a guide rail f. As shown in the drawings, a hydraulic cylinder g one end of which is fixed is connected to the injection device b.

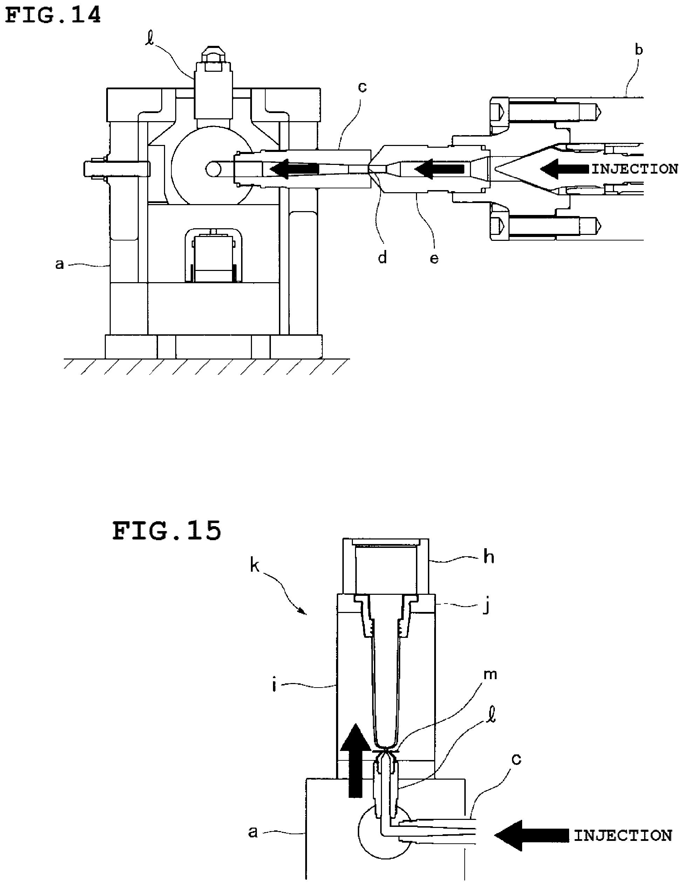

FIG. 14 shows the abutment between the hot runner device a and the nozzle e of the injection device b in cross section. FIG. 15 shows a state in which an injection mold k constituted of an upper mold h, a lower mold i, and a lip mold j is formed on a discharge side of the hot runner device a. As shown in the drawings, the nozzle e of the injection device b is caused to abut the resin injection port d (main nozzle) from a lateral direction of the hot runner device a, and injects a molten resin into the hot runner device a. In the hot runner device a, a runner is branched so that a plurality of hot runner nozzles l are erected and each of the hot runner nozzles l faces the bottom of the lower mold i at its gate. Thus, the molten resin is injected from the erected hot runner nozzles l into preform formation space formed by the injection mold k.

In the injection molding unit, the molten resin is injected from the injection device with a high injection pressure at regular time intervals. Unless the nozzle of the injection device is kept abutting the resin injection port of the hot runner device with a high pressure, the molten resin may leak between the nozzle and the main nozzle.

Thus, a nozzle touch is performed in which the hydraulic cylinder is operated in a forward direction of moving the nozzle of the injection device in accordance with injection timing, to increase the degree of abutment of the nozzle with the aforementioned resin injection port and keep this state for a required period of time. This prevents leakage of the resin between the nozzle and the main nozzle, and a reduction in the injection pressure on the inside of the injection mold.

### (Inclination Due To Nozzle Touch)

In the injection stretch blow molding machine, as described above, the nozzle of the injection device disposed in a horizontal direction is caused to abut the main nozzle of the hot runner device. The hot runner nozzles of the hot runner device are each erected. The nozzle touch, which is performed in accordance with the injection timing described above, causes deformation of the hot runner device by a push of the nozzle, thus resulting in inclination of each hot runner nozzle. The inclination of the hot runner nozzles, whenever performing the nozzle touch, is not preferable for molding by the injection molding unit.

### (Nozzle Touch After High Pressure Clamping)

When the lower mold is alone without being clamped with the aforementioned upper mold, the inclination of the hot runner nozzles causes a positional deviation of the lower mold. The positional deviation of the lower mold by itself causes a misalignment with the descending upper mold and the like. Therefore, the conventional injection stretch blow molding machine performs the nozzle touch after the upper mold and lower mold clamping step.

To be more specific, while the rotating plate descends so as to overlay the lip mold on the lower mold, the upper mold descends through the lip mold into a required portion of the lower mold with application of a clamping force from a clamping device, i.e., the mold clamping is performed, to form the injection mold. After the injection mold is formed, the clamping device clamps using a high-pressure clamping force instead of the previous clamping force. By applying the high-pressure clamping force, the upper mold and lower mold clamping step is completed. After that, the hydraulic cylinder is operated so as to increase a contact pressure to the hot runner device in the forward direction of moving the nozzle, so that injection is performed while the nozzle abuts the main nozzle with the high pressure.

For the above reasons, the injection stretch blow molding machine performs the nozzle touch after the upper mold and lower mold clamping step, when forming a preform in the injection molding unit. However, performing the nozzle touch after the upper mold and lower mold clamping step causes the following problems in actual fact.

### (Wear Of Heat Insulating Sheet)

The aforementioned hot runner nozzle is provided with a heater means to keep a molten state of the resin inside the runner. On the other hand, the lower mold of the injection mold has the function of cooling the molten resin charged into the preform formation space to a certain temperature. Therefore, a heat insulating sheet m is attached to an upper tip of the hot runner nozzle, in order to prevent heat conduction from the hot runner nozzle to the lower mold (see FIG. 15).

When the high-pressure clamping force is applied from the clamping device to the injection mold, as described above, the lower mold pushes the hot runner nozzle through the heat insulating sheet, and hence the heat insulating sheet is sandwiched therebetween with a high pressure. At this time, the hot runner nozzle is slightly inclined due to the nozzle touch, and rubs the heat insulating sheet at the deviating upper tip. A repetition of the nozzle touches wears the heat insulating sheet. Therefore, the heat insulating sheet frequently needs replacement.

### (Occurrence Of Deviation Of Center)

Since the hot runner nozzle is slightly inclined due to the nozzle touch after the increase in the pressure of the clamping force, the center of the gate of the hot runner nozzle may deviate from the center of a gate corresponding portion of the lower mold, thus causing a reduction in a resin charging ability.

### (Requirement For Dedicated Actuator)

When performing the nozzle touch, a resin channel has to be connected from the nozzle to the main nozzle. Thus, a dedicated actuator is required to guide the nozzle to the resin injection port in the forward direction of moving the nozzle toward the main nozzle and to maintain a pressing force for a required period of time.

### (Long Waiting Time For Injection)

In molding by the above injection stretch blow molding machine, the nozzle touch is performed after the upper mold and lower mold clamping step, and the molten resin is injected after the nozzle touch. Especially in the upper mold and lower mold clamping step, the operation proceeds in the following order.

First, while the rotating plate descends so as to overlay the lip mold on the lower mold, the upper mold descends through the lip mold. The upper mold is overlaid on the lip mold, while receiving a clamping force from the clamping device through a clamping plate such that a core portion of the upper mold is fitted into a cavity portion of the lower mold. After the upper mold, the lip mold, and the lower mold constitute the injection mold, while receiving the clamping force, the clamping device changes the clamping force to a high-pressure clamping force to apply the high-pressure clamping force to the injection mold.

Upon the change of the high-pressure clamping force of the aforementioned clamping device, the hydraulic cylinder is operated so as to apply a pressing force in the forward direction of moving the aforementioned nozzle toward the hot runner device. An increase in the pressure in the forward direction of the nozzle completes the operation of the nozzle touch.

On the other hand, an injection operation of the injection device is controlled using a timer. When a count-up value of the timer has reached a set count value, an injection operation is performed. In the injection device for feeding the molten resin into the injection mold in the injection stretch blow molding machine, the completion of the nozzle touch is set as a count start point at which the timer starts counting. An elapsed time from this count start point to when the count-up value reaches the predetermined set count value is set as an injection start stage. In other words, operation proceeds to the inject start stage, after the completion of the nozzle touch operation.

When a count-up value has reached the set count value, the operation proceeds to an injection stage in which the injection device is operated, and the operation duration of the injection device is set in advance.

As described above, a clamping stage in which the upper mold and the lower mold are clamped with the high-pressure clamping force, and a nozzle touch subsequent to the clamping stage have to be sequentially performed before an injection, thus causing a long waiting time for the injection. Since an operation time required for the injection molding unit to mold a preform is longer than any of an operation time of the stretch blow molding unit and an operation time of the ejection unit, a molding cycle of the injection stretch blow molding machine depends on the operation time of the injection molding unit, in actual fact.

Considering the circumstances described above, an object of the present invention is to enable the injection molding unit to perform an injection at an early stage by omitting the nozzle touch, and the present invention aims at reducing a molding cycle of the injection stretch blow molding machine.

### Solution to Problem

The prevent invention has been made in consideration of the above-described problems. In order to solve the above-described problems, the present invention provides a method for molding a container using an injection stretch blow molding machine, the injection stretch blow molding machine including: a clamping plate that is guided by a tie bar erected on a lower base plate so as to be movable upward and downward in a vertical direction of the molding machine above the lower base plate; an intermediate base plate that is guided by the tie bar so as to be movable upward and downward in the vertical direction of the molding machine under the clamping plate; a rotating plate that is attached under the intermediate base plate in a freely rotatable manner, the rotating plate having a rotation axis direction coinciding with the vertical direction of the molding machine, the rotating plate having a lip mold for forming a mouth portion of the container in each of three directions on a bottom surface thereof; and a rotary drive motor that is disposed at a center of a top of the intermediate base plate and is caused to intermittently rotate the rotating plate every 120 degrees so as to stop the lip molds at three stop positions. When a container is molded by the injection stretch blow molding machine in which the lip molds stop at an injection molding unit, a stretch blow molding unit, and an ejection unit as the stop positions,
the injection molding unit of the injection stretch blow molding machine includes : a lower mold that is a cavity mold disposed on a side of an injection device, a hot runner nozzle of a hot runner device installed in the molding machine being disposed so as to face a bottom of the lower mold; an upper mold that is movable upward and downward in the vertical direction of the molding machine, the upper mold being a core mold that descends through the lip mold situated in the injection molding unit and forms an injection mold having a preform forming space therein with the lower mold on which the lip mold is overlaid; and a clamping device that clamps the upper mold and the lower mold on which the lip mold that passes the upper mold is overlaid.

Here, the method includes:
injecting a molten resin into the injection mold constituted of the upper mold, the lip mold situated in a position corresponding to the injection molding unit by a turn of the rotating plate, and the lower mold, to mold a preform;
transferring the preform that is molded in the injection molding unit and held by the lip mold to the stretch blow molding unit by the turn of the rotating plate, and molding a container in the stretch blow molding unit by stretching and blowing the preform; and
transferring the container that is molded in the stretch blow molding unit and held by the lip mold to the ejection unit by the turn of the rotating plate, and releasing the container from the lip mold in the ejection unit, wherein
the injection device is connected and fixed to the hot runner device of the injection stretch blow molding machine, the injection device performing an injection operation when a count-up value of a timer has reached a set count value, and
the timer sets a count start point in any of a stage of turning the rotating plate, a stage of stopping the rotating plate and fixing the rotating plate in a non-rotatable manner, and a stage of starting clamping the upper mold and the lower mold.

### Advantageous Effects of Invention

According to the present invention, the injection device can perform an injection without waiting for the completion of a high-pressure clamping operation and the completion of a nozzle touch operation, in contrast to the conventional art. The count start point for performing the injection of the injection device at the time of count up is set in any of the stage of turning the rotating plate, the stage of stopping and fixing the rotating plate, and the stage of starting clamping the upper mold and the lower mold, and therefore the injection device performs the injection in a state of overlapping the stage.

In other words, it is possible to eliminate a conventional waiting time including the time to assemble the upper mold, the lip mold, and the lower mold into the injection mold, the time to complete switching to apply a high-pressure clamping force to the injection mold, and the time to complete a pushing operation in which a nozzle of the injection device pushes a main nozzle of the hot runner device (completion of a nozzle touch). Therefore, the time required for the injection molding unit to mold the preform is reduced, thus resulting in a reduction in a molding cycle of the molding machine and an improvement in productivity.

Eliminating the need for the nozzle touch increases the length of a replacement period of a heat insulating sheet described above. Problems such as deviation between the center of the gate of the hot runner nozzle and the center of a gate corresponding portion of the lower mold and a requirement for a dedicated actuator do not arise.

Furthermore, since the injection is performed, while the upper mold is descending toward the lower mold. Since the injection is performed in a state of not completely closing the injection mold having many gaps between the molds, a reduction in fluid resistance of the molten resin serves to improve filling ability. Gas and air are favorably discharged between the upper mold and the lower mold.

The improvement in filling ability has the synergistic effect of facilitating discharge of gas, thus reducing clogging of an air vent. This allows an increase in the length of a maintenance period of the air vent. Furthermore, the reduction in fluid resistance of the resin owing to the improvement in filling ability allows a reduction in the diameter of an injection ram of the injection device.

### Brief Description of Drawings

FIG. 1 shows an injection stretch blow molding machine that embodies the present invention, in which (a) is an explanatory view of an injection molding unit viewed from the front, (b) is an explanatory view of the injection molding unit viewed from the side, and (c) is an explanatory view showing the disposition of the injection molding unit, a stretch blow molding unit, and an ejection unit.
FIG. 2 is an explanatory view showing a connected hot runner device and injection device.
FIG. 3 is an explanatory view of the connection fixation between a main nozzle of the hot runner device and a nozzle of the injection device.
FIG. 4 is an explanatory view showing the connection fixation between the main nozzle and the nozzle in cross section.
FIG. 5 shows fixation of a rotating plate, in which (a) is an explanatory view showing a state before a descent of a lock pin, and (b) is an explanatory view showing a state after the descent of the lock pin.
FIG. 6 shows clamping between an upper mold and a lower mold, in which (a) is an explanatory view showing a point in time when the upper mold descends, and (b) is an explanatory view showing a state after the descent of the upper mold.
FIG. 7 is an explanatory view showing a state of overlapping between a molten resin feeding step and other steps.
FIG. 8 shows opening of the upper mold and the lower mold, in which (a) is an explanatory view showing a point in time when the upper mold ascends, and (b) is an explanatory view showing a state after the ascent of the upper mold.
FIG. 9 shows a blow mold clamping step, in which (a) is an explanatory view showing a state of moving blow molds in a clamping direction, and (b) is an explanatory view showing a state of the clamped blow molds.
FIG. 10 shows a stretch blow step, in which (a) is an explanatory view during a stretch blow, and (b) is an explanatory view of blow discharge.
FIG. 11 shows a blow mold opening step, in which (a) is an explanatory view showing a state before the blow molds start opening, and (b) is an explanatory view showing a state of opening the blow molds.
FIG. 12 is an explanatory view of the hot runner device and the injection device in a state of performing a nozzle touch.
FIG. 13 is an explanatory view of a nozzle touch portion between the main nozzle of the hot runner device and the nozzle of the injection device.
FIG. 14 is an explanatory view showing the nozzle touch between the main nozzle and the nozzle in cross section.
FIG. 15 is an explanatory view of an injection mold shown in cross section.

### Description of Embodiment

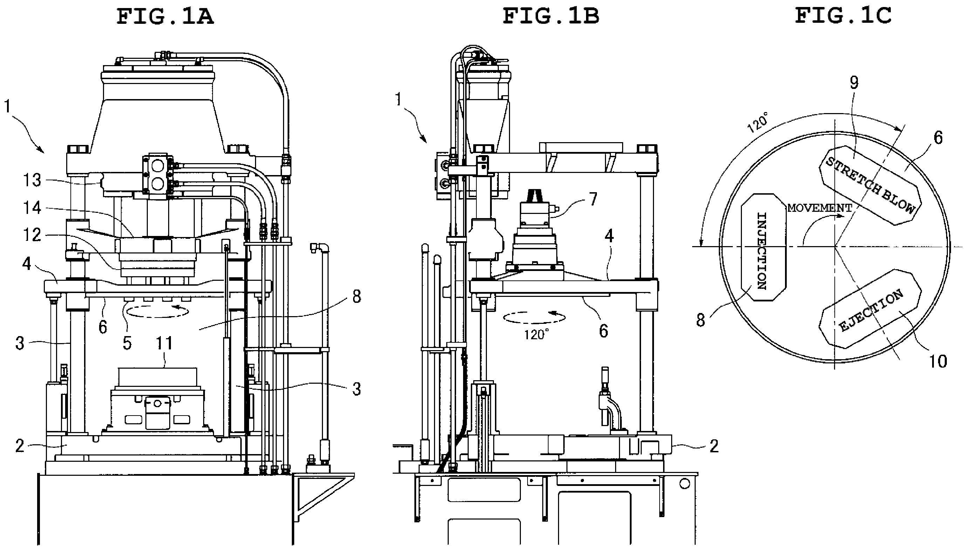

The present invention will be described in detail on the basis of an embodiment shown in FIGS. 1 to 11. FIG. 1 shows an injection stretch blow molding machine 1. The injection stretch blow molding machine 1 includes an intermediate base plate 4 that is movable upward and downward above a lower base plate 2 by being guided by tie bars 3 erected on the lower base plate 2, a rotating plate 6 that is attached on a bottom surface of the intermediate base plate 4 in a rotatable manner and has lip molds 5 each of which constitutes one of a pair of split molds to form a mouth portion of a container in three directions of the bottom surface, and a rotary drive motor 7 that is disposed at the center of the top of the intermediate base plate 4 and intermittently rotates and stops the rotating plate 6 having the three lip molds every 120 degrees.

The lip molds 5 circularly move about the center of the rotating plate, as the center of a rotation axis, by the rotation of the rotating plate 6, and, as shown in FIG. 1(c), stop at the positions of an injection molding unit 8, a stretch blow unit 9, and an ejection unit 10. These three stations are disposed in positions at rotation angles of 120 degrees apart. FIG. 1(c) schematically shows the disposition of the three stations, for ease of explanation.

### (Injection Molding Unit)

The aforementioned injection molding unit 8 of the injection stretch blow molding machine 1 has a lower mold 11, i.e., a cavity mold disposed on the lower base plate 2, an upper mold 12 that is movable downward and upward above the lower mold 11 and descends through the lip mold 5 stopped in the position corresponding to the injection molding unit 8, and a clamping device 13 that clamps the upper mold 12 and the lower mold 11 through the lip mold 5. The lip mold 5 that is situated in the position corresponding to the injection molding unit 8 descends together with the rotating plate 6 in a state of being situated in a descent line of the upper mold 12, so as to be overlaid on the lower mold 11.

An injection device, which will be described later, is disposed so as to correspond to the injection molding unit 8 shown in FIG. 1(c), and the aforementioned lower mold 11 is situated on the side of the injection device. Note that, being situated on the side of the injection device does not mean that being attached to the injection device, but represents the positional relationship between the movable upper mold disposed on the side of a clamping device, which will be described later, and the lower mold disposed on the side of the injection device. When viewing the disposition of the three stations from above, since the injection molding unit 8 is disposed so as to correspond to the injection device and the injection molding unit 8 is provided with the lower mold 11, the lower mold 11 is situated on the side of the injection device.

The upper mold 12 descends through the descending lip mold 5, while receiving a clamping force from a clamping plate 14 that is descending by the operation of the clamping device 13. Furthermore, a core portion (a projection portion protruding downward) of the upper mold 12 is fitted into the cavity portion (a recessed portion) of the lower mold 11 through the lip mold 5 that is overlaid on the lower mold 11. The upper mold 12 is overlaid on the lip mold 5 in this manner, and the upper mold 12, the lip mold 5, and the lower mold 11 form an injection mold 15 in a state that the clamping force is applied from the clamping device 13 through the clamping plate 14 (see FIG. 15).

The aforementioned clamping device 13 pushes the upper mold 12 downward by applying the clamping force from above to the upper mold 12 through the clamping plate 14, as described above. When the descended upper mold 12 and lip mold 5 form the aforementioned injection mold 15 with the lower mold 11, the clamping force is changed to a high-pressure clamping force, thereby applying the high-pressure clamping force to the injection mold 15 constituted of the three molds.

### (Stretch Blow Molding Unit)

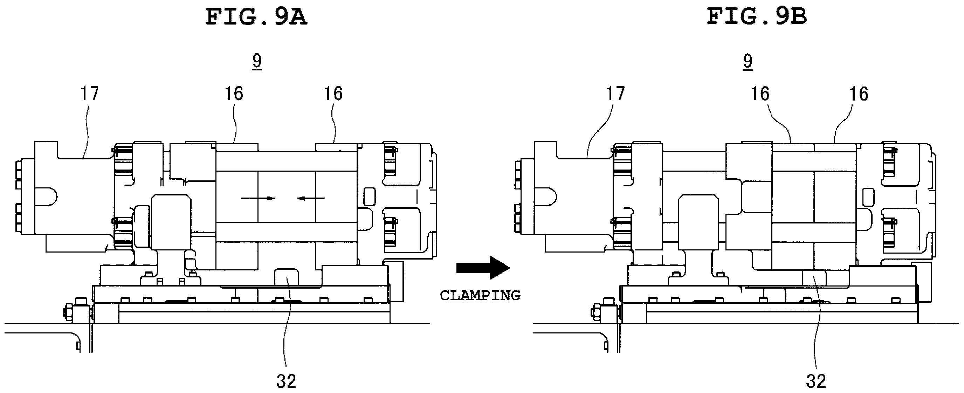

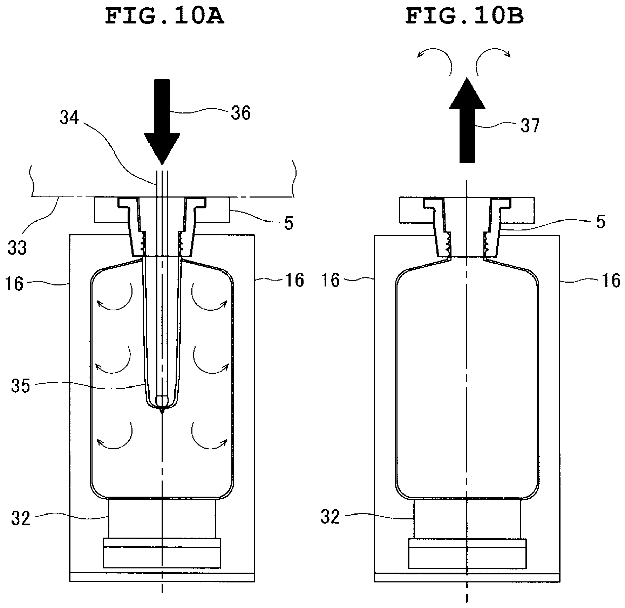

The stretch blow molding unit 9 includes a pair of openable blow molds 16, a blow mold clamping cylinder 17 that performs closing and opening the blow molds 16 and changes the clamping force to the blow molds to the high-pressure clamping force and applies the high-pressure clamping force to the clamped blow molds 16, and a stretch blow mechanism that supplies stretch blow air into a stretch rod and the inside of the closed blow molds (see FIGS. 9 and 10).

The lip mold 5 that is situated in a position corresponding to the stretch blow molding unit 9 by a stop of the rotating plate 6 is fitted from above into the blow molds 16 in a clamped state by descent of the rotating plate 6, so that the lip mold 5 is interposed between top edges of the pair of blow molds 16. After the lip mold 5 has been interposed between the blow molds 16, the clamping force is changed to the high-pressure clamping force, as described above, and thereafter the operation of the stretch blow device is performed.

### (Ejection Unit)

The aforementioned ejection unit 10 is a portion to open the lip mold 5 that stops in a position corresponding to the ejection unit 10. By opening the lip mold 5, a mouth portion of a molded container is released from the mold, which will be described later, to send the container out of the molding machine. Note that, the lip mold 5 is clamped after releasing the mouth portion of the molded container.

### (Hot Runner Device And Injection Device)

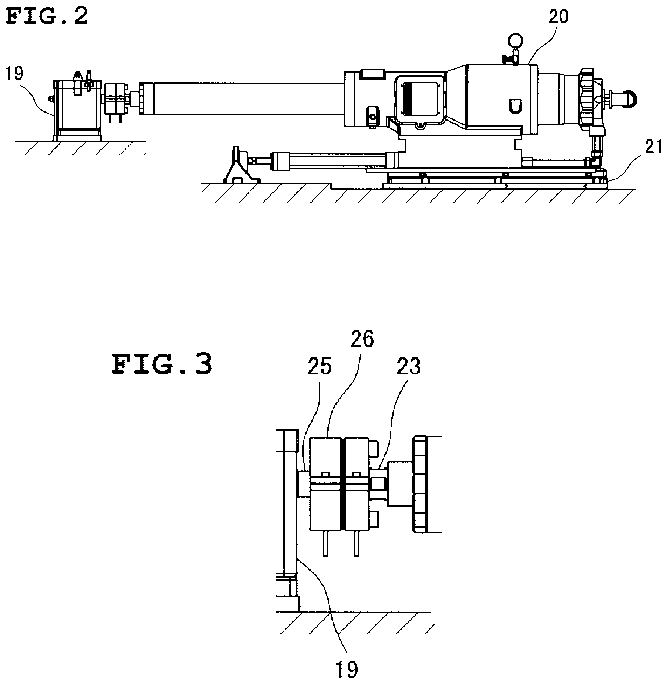

FIG. 2 shows a hot runner device 19 and an injection device 20 that are installed below the lower mold of the injection molding unit of the injection stretch blow molding machine. FIG. 3 shows a connection portion between the hot runner device 19 and the injection device 20.

As the installation of the injection device 20, the injection device 20 is disposed on a table through a guide rail 21, and a hydraulic cylinder 22 one end of which is fixed is connected to the injection device 20, just as with the above-described conventional one.

Note that, this embodiment executes an injection without performing a nozzle touch, as described later. The reason why this installation is adopted is that, when performing maintenance, the injection device 20 is required to be isolated from the hot runner device 19 and moved backward by the operation of the hydraulic cylinder 22.

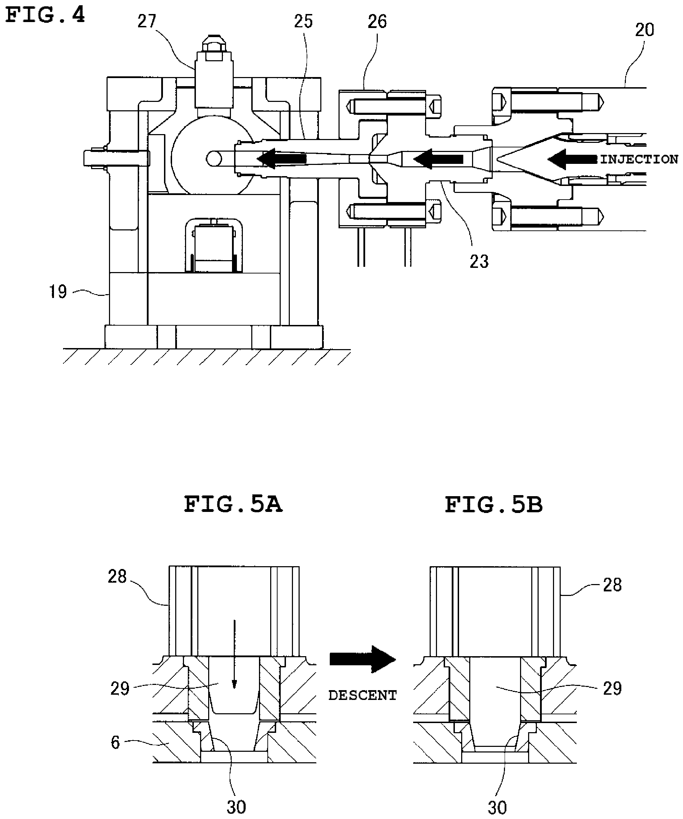

As shown in FIGS. 2 and 3, the hot runner device 19 and the injection device 20 are connected therebetween and fixed. FIG. 4 shows a state of connection fixation between the hot runner device 19 and a nozzle 23 of the injection device 20 in cross section. As shown in the drawing, the nozzle 23 and a connection flange 26, which is engaged with a main nozzle 25 of the hot runner device 19, are fixed with bolts.

Since a discharge port of the nozzle 23 and an injection port of the main nozzle 25 are opposed and tightly connected without making a gap therebetween, a resin channel through which a molten resin fed from the nozzle 23 enters the main nozzle 25, passes through branched runners of the hot runner device 19, and reaches the bottom of the aforementioned lower mold 11 from the plurality of erected hot runner nozzles 27 is always formed.

The operation of the rotary injection stretch blow molding machine will be described below.

### (Rotating Plate Turning Step: FIG. 1)

As shown in FIG. 1, the rotating plate 6 turns at 120 degrees in a state that the clamping plate 14, the upper mold 12, and the intermediate base plate 4 are situated in an upper position of a standby height. A rotating plate turning step refers to the time from when the rotating plate 6 starts turning to when the rotating plate 6 stops after a turn of 120 degrees. In the rotating plate turning step, for example, the lip mold 5 that holds a preform molded by the injection molding unit 8 is transferred to the stretch blow molding unit 9, the lip mold 5 that holds a blow-molded container molded by the stretch blow molding unit 9 is transferred to the ejection unit 10, and the lip mold 5 that is situated in the ejection unit 10 is transferred to the injection molding unit 8.

### (Rotating Plate Fixing Step: FIG. 5)

Upon stopping the turn of the rotating plate 6, the operation shifts from the rotating plate turning step to a rotating plate fixing step.

In the rotating plate fixing step, the rotating plate 6 is fixed to prevent an unintended turn, such that the aforementioned lip molds 5 are correctly situated in predetermined positions corresponding to the injection molding unit 8, the stretch blow molding unit 9, and the ejection unit 10. In the injection molding unit 8, the lip mold 5 is fixed so as not to deviate in a circular movement direction in a state of being situated in a position corresponding to a descent line of the upper mold 12.

To be more specific, as a stopper of the rotating plate 6 when the lip mold 5 is situated in a position corresponding to the injection molding unit 8, a lock pin 29 descends by the operation of a rotating plate lock cylinder 28 provided in the intermediate base plate 4. The lock pin 29 is engaged in a lock pin bush 30 provided in a required portion of the rotating plate 6, in order to fix the rotating plate 6 without rotation.

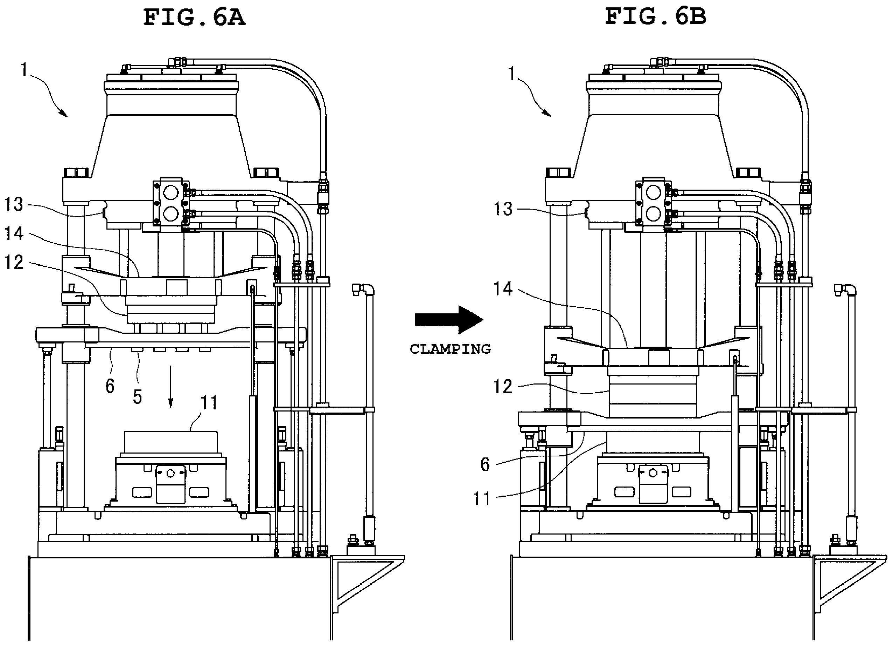

### (Upper Mold And Lower Mold Clamping Step: FIG. 6)

After the fixation of the rotating plate 6 by the aforementioned lock pin 29, the operation shifts from the rotating plate fixing step to an upper mold and lower mold clamping step. In the clamping step, after the fixation of the rotating plate 6 is completed in the fixing step, the rotating plate 6 descends by descent of the intermediate base plate 4. The upper mold 12 disposed above the rotating plate 6 descents so as to pass the inside of a container mouth portion molding portion of the lip mold 5, while being pushed downward by descent of the clamping plate 14, in other words, while receiving a clamping force of the clamping device 13 through the clamping plate 14.

The core portion of the upper mold 12 is overlaid on the lip mold 5 in such a manner as to be fitted into the inside of the lower mold 11 through the lip mold 5, as well as overlaying the lip mold 5 on the lower mold 11, so that a combination of the upper mold 12, the lip mold 5, and the lower mold 11 constitutes the injection mold 15 in a state of receiving the clamping force from the clamping device 13. When the injection mold 15 is obtained, the clamping device 13 changes the clamping force to a high-pressure clamping force and applies the high-pressure clamping force to the injection mold 15. The upper mold and lower mold clamping step is completed, when the change of the pressure of the clamping force to the high-pressure clamping force is completed.

### (Molten Resin Feeding Step)

The injection operation of the aforementioned injection device 20 is controlled using a timer provided in a not-shown control device . When the timer counts up and the count-up value reaches (coincides with) a set count value having been set in advance, the injection device performs an injection.

The timer provided in the aforementioned control unit can set the count start point in any of the stage of turning the rotating plate 6, the stage of stopping the rotating plate 6 and fixing the rotating plate 6 in a non-rotatable manner, and the stage of starting clamping the upper mold and the lower mold.

Since a count start point 31 at which the timer starts counting up is set in any of the stage of turning the rotating plate 6, the stage of stopping the rotating plate 6 and fixing the rotating plate 6 in a non-rotatable manner, and the stage of starting clamping the upper mold and the lower mold, a beginning part of a molten resin feeding step C, which is constituted of a count-up time A starting from the count start point 31 and an injection time B, may be overlapped with an upper mold and lower mold clamping step D, or may also be overlapped even with a rotating plate fixing step E, i.e., a preceding step of the upper mold and lower mold clamping step D, or may also be overlapped even with a rotating plate turning step F, i.e., the preceding step of the rotating plate fixing step E. Thus, it is possible to significantly shorten a waiting time for the injection, and hence shorten a time to complete the injection in the injection molding unit 8 more than before.

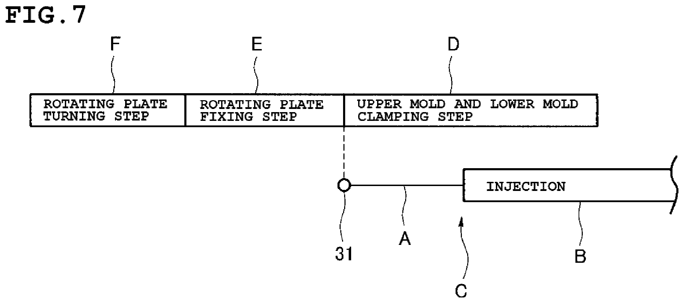

In this embodiment, as shown in FIG. 7, the count start point 31 is set at the stage of starting clamping the upper mold and the lower mold (the beginning of the upper mold and lower mold clamping step D). The set count value is set at 0.30 seconds, and thus the injection device starts an injection after counting up 0.30 seconds, as the set count value. Note that, the injection time itself is not shortened but the same as before, and the injection device continues the injection even after the high-pressure clamping force for the injection mold is achieved.

### (Cooling Step)

After the completion of the aforementioned molten resin feeding step, the operation shifts to a cooling step. In the cooling step, the molten resin that is injected into the injection mold clamped with the high pressure is forcefully cooled for a preset period of time, to obtain a preform the temperature of which is reduced to a predetermined temperature.

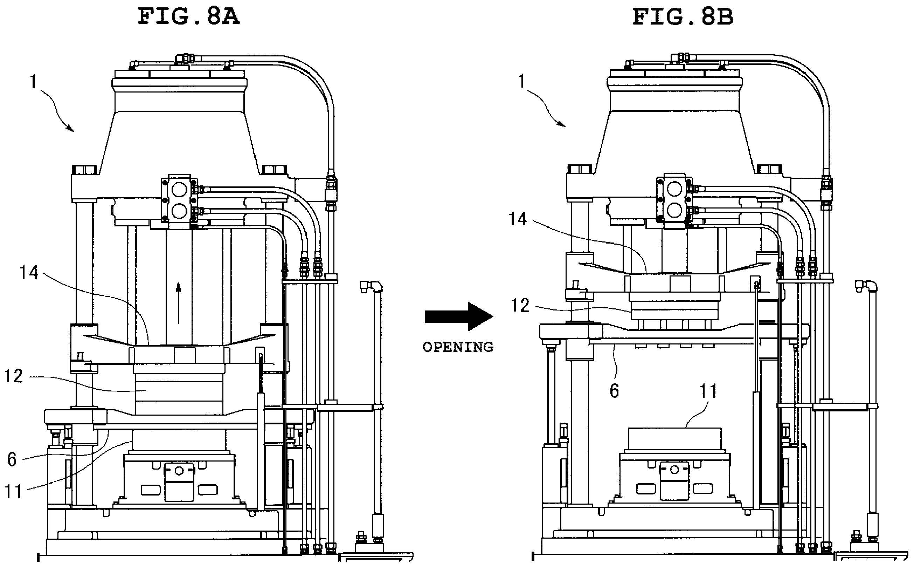

### (Upper Mold And Lower Mold Opening Step: FIG. 8)

After the completion of the cooling step, the operation shifts to an upper mold and lower mold opening step. In the upper mold and lower mold opening step, as shown in FIG. 8, an ascent of the clamping plate 14 releases the application of the high-pressure clamping force from the clamping device 13. The upper mold 12 ascends, and at the same time the rotating plate 6 and the lip mold 5 ascend to open the mold. The preform is released from the lower mold 11. The rotating plate 6 that holds the mouth portion of the preform at the lip mold 5 ascends to a predetermined position in which the rotating plate 6 can turn, and stop.

### (Operation Of Stretch Blow Unit)

### (Blow Mold Clamping Step: FIG. 9)

When the aforementioned upper mold and lower mold opening step is completed in the injection molding unit 8, the rotating plate 6 itself starts the rotating plate turning step and turns at 120 degrees, so that the lip mold 5 that holds the mouth portion of the preform circularly moves to the stretch blow molding unit. During the rotating plate turning step, as shown in FIG. 9, the stretch blow molding unit 9 starts the operation of clamping the pair of blow molds 16 with application of a clamping force from the blow mold clamping cylinder, to fit the pair of blow molds 16 on a bottom mold 32. Forward movement and fit of the pair of blow molds 16 on the bottom mold 32 are completed during the rotating plate turning operation. The blow mold clamping cylinder continues applying the clamping force, even after the fit of the molds.

As described above, even when stretch blow molding unit 9 completes assembling the blow molds 16 and the bottom mold 32, the rotating plate 6 is in the middle of a 120-degree turn. Even when, in the injection molding unit 8, the next lip mold 5 is situated in a position corresponding to the injection molding unit 8 and the rotating plate 6 is stopped and fixed in the position, the preform held by the lip mold 5 is on standby above the blow molds 16 in the stretch blow molding unit 9, because the rotating plate itself is situated in an upper position. By a descent of the rotating plate to clamp the upper mold, the lip mold, and the lower mold in the injection molding unit 8, the lip mold 5 that is situated in a position corresponding to the stretch blow molding unit 9 is assembled to the blow molds 16 from above.

When the lip mold 5 is assembled to the blow molds 16 so as to insert the preform into the blow molds, the clamping force applied to the blow molds 16 is changed to a high-pressure clamping force by the operation of the blow mold clamping cylinder 17. The change of the clamping force to the high-pressure clamping force is performed concurrently with the change of the clamping force to the high-pressure clamping force in the injection molding unit 8.

### (Stretch Blow Step: FIG. 10)

The aforementioned blow mold clamping step is completed when the clamping force applied to the blow molds 16 is changed to the high-pressure clamping force, and the operation shifts to a stretch blow step in which stretching and blowing are performed on the preform. In the stretch blow step, as shown in FIG. 10, a stretch blow mechanism 33 descends from above the lip mold and is overlaid on the lip mold 5. A stretch rod 34 of the stretch blow mechanism 33 is inserted into the blow molds and stretches a preform 35 inside the blow molds, while a blow air supply 36 is performed, to form a container as a product having a stretched and blown shape inside the blow molds. The supply of stretch blow air is stopped after a required time has elapsed. The stretch rod 34 is retracted, and the stretch blow mechanism 33 ascends to an upper standby position. A blow air discharge 37 in which the blow air is discharged from the container inside the blow molds is performed for a predetermined period of time, and thus the stretch blow step is completed.

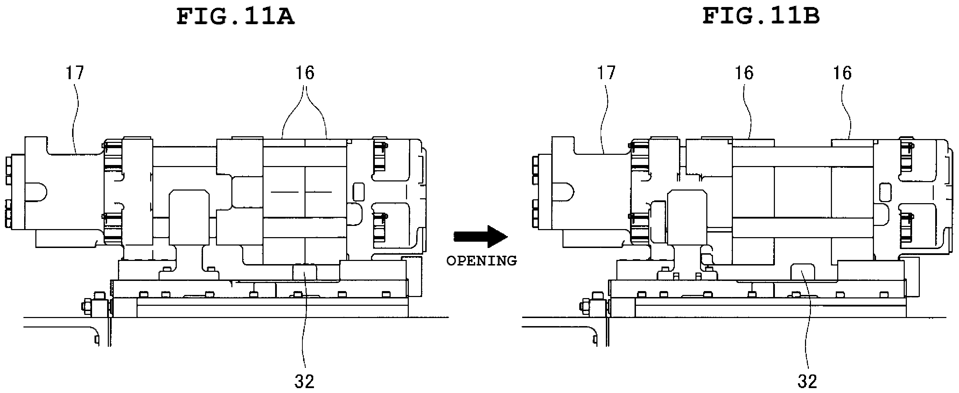

### (Blow Mold Opening Step: FIG. 11)

After the completion of the stretch blow step, the operation shifts to a blow mold opening step. In the blow mold opening step, the application of the clamping force is released by the operation of the aforementioned blow mold clamping cylinder 17, to release the container from the opened blow molds 16. The blow molds are opened before an injection is completed in the aforementioned injection molding unit 8. By an ascent of the rotating plate 6, the container formed by stretch blow molding ascends in a state of being held by the lip mold 5, and the container is released from the blow molds 16. The ascent of the rotating plate 6 at this time is the same as the ascent of the rotating plate 6 when opening the upper mold and the lower mold in the injection molding unit 8.

The rotating plate 6 that has moved the container upward by the lip mold and has released the container from the molds in the stretch blow molding unit turns again at 120 degrees, upon completing the upper mold and lower mold opening step in the aforementioned injection molding unit 8. Since a process of the injection molding unit takes long time, the lip mold is transferred from the stretch blow molding unit to the ejection unit after the completion of the upper mold and lower mold opening step in the injection molding unit 8. As a matter of course, the 120-degree turn also serves as an operation to circularly move the lip mold that has corresponded to the ejection unit 10 to the injection molding unit 8, and an operation to circularly move the lip mold that has corresponded to the injection molding unit 8 to the stretch blow molding unit 9 while holding a preform. Note that, for the sake of ease of explanation, the drawings that show the movement of the blow molds in the stretch blow step omit the lip molds.

### (Ejection Step in Ejection Unit)

When the rotating plate 6 turns at 120 degrees and stops, the lip mold 5 that holds the container formed by stretch blow molding is shifted to a position corresponding to the ejection unit 10. The lip mold 5 is opened in the ejection unit 10 at the time when, taking the operation of the injection molding unit 8 as an example, the clamping force is changed to a high-pressure clamping force after the completion of clamping the upper mold and the lower mold and the like, so as to release the mouth portion of the held bottle-shaped container from the molds and eject the container (send the container out of the molding machine).

In the above-described embodiment, the count start point 31 is set in the stage of starting clamping the upper mold and the lower mold, and the set count value is 0.30 seconds. After counting up the set count value, i.e., 0.30 seconds, the injection device performs an injection, but the present invention is not limited to this embodiment.

### Reference Signs List

- 1: injection stretch blow molding machine
- 4: intermediate base plate
- 5: lip mold
- 6: rotating plate
- 8: injection molding unit
- 9: stretch blow molding unit
- 10: ejection unit
- 11: lower mold
- 12: upper mold
- 13: clamping device
- 14: clamping plate
- 15: injection mold
- 16: blow mold
- 19: hot runner device
- 20: injection device
- 23: nozzle
- 25: main nozzle
- 26: connection flange
- 27: hot runner nozzle
- 28: rotating plate lock cylinder
- 29: lock pin
- 31: count start point
- 32: bottom mold
- 34: stretch rod
- 35: preform
- 36: blow air supply
- 37: blow air discharge
- A: count-up time
- B: injection
- C: molten resin feeding step
- D: upper mold and lower mold clamping step
- E: rotating plate fixing step
- F: rotating plate turning step

## Claims

1. A method for molding a container using an injection stretch blow molding machine (1), the injection stretch blow molding machine (1) including: a clamping plate (14) that is guided by a tie bar (3) erected on a lower base plate (2) so as to be movable upward and downward in a vertical direction of the molding machine above the lower base plate (2); an intermediate base plate (4) that is guided by the tie bar (3) so as to be movable upward and downward in the vertical direction of the molding machine under the clamping plate (14); a rotating plate (6) that is attached under the intermediate base plate (4) in a freely rotatable manner, the rotating plate (6) having a rotation axis direction coinciding with the vertical direction of the molding machine, the rotating plate (6) having a lip mold (5) for forming a mouth portion of the container in each of three directions on a bottom surface thereof; and a rotary drive motor (7) that is disposed at a center of a top of the intermediate base plate (4) and is caused to intermittently rotate the rotating plate every 120 degrees so as to stop the lip molds at three stop positions, wherein when a container is molded by the injection stretch blow molding machine in which the lip molds stop at an injection molding unit (8), a stretch blow molding unit (9), and an ejection unit (10) as the stop positions,the injection molding unit (8) of the injection stretch blow molding machine (1) includes : a lower mold (11) that is a cavity mold disposed on a side of an injection device, a hot runner nozzle (27) of a hot runner device (19) installed in the molding machine being disposed so as to face a bottom of the lower mold (11); an upper mold (12) that is movable upward and downward in the vertical direction of the molding machine, the upper mold (12) being a core mold that descends through the lip mold (5) situated in the injection molding unit (8) and forms an injection mold having a preform forming space therein with the lower mold (11) on which the lip mold (5) is overlaid; and a clamping device (13) that clamps the upper mold (12) and the lower mold (11) on which the lip mold (5) that passes the upper mold (12) is overlaid,the method comprising:injecting a molten resin into the injection mold constituted of the upper mold (12), the lip mold (5) situated in a position corresponding to the injection molding unit (8) by a turn of the rotating plate, and the lower mold (11), to mold a preform (35);transferring the preform (35) that is molded in the injection molding unit (8) and held by the lip mold (5) to the stretch blow molding unit (9) by the turn of the rotating plate (6), and molding a container in the stretch blow molding unit (9) by stretching and blowing the preform (35); and transferring the container that is molded in the stretch blow molding unit (9) and held by the lip mold (5) to the ejection unit (10) by the turn of the rotating plate (6), and releasing the container from the lip mold (5) in the ejection unit (10), wherein the injection device (20) is connected and fixed to the hot runner device (19) of the injection stretch blow molding machine (1), the injection device (20) performing an injection operation when a count-up value of a timer has reached a set count value, and the timer sets a count start point in any of a stage of turning the rotating plate (6), a stage of stopping the rotating plate (6) and fixing the rotating plate (6) in a non-rotatable manner, and a stage of starting clamping the upper mold (12) and the lower mold (11).

## Patentansprüche

1. Ein Verfahren zur Formung eines Behälters mittels einer Spritzstreckblasformmaschine (1), wobei die Spritzstreckblasformmaschine (1) enthält: eine Klemmplatte (14), die von einer auf einer unteren Basisplatte (2) montierten Spurstange (3) derart geführt ist, dass sie über der Basisplatte (2) in einer vertikalen Richtung der Formmaschine aufwärts und abwärts bewegt werden kann; eine Zwischenplatte (4), die durch die Spurstange (3) derart geführt ist, so dass sie in einer vertikalen Richtung der Formmaschine unter der Klemmplatte (14) aufwärts und abwärts geführt werden kann; eine Rotationsplatte (6), welche unter der Zwischenplatte (4) in einer frei drehbaren Art und Weise angeordnet ist, wobei die Rotationsplatte (6) eine Rotationsachsenrichtung aufweist, die mit der vertikalen Richtung der Formmaschine zusammenfällt, wobei die Rotationsplatte (6) eine Lippenform (5) zur Formung einer Mundportion des Containers in jeder von drei Richtungen auf einer Bodenfläche davon aufweist; einen Rotationsantriebsmotor (7), welcher im Zentrum einer Oberseite der Zwischenplatte (4) angeordnet ist und bewirkt, dass die Rotationsplatte um jeweils 120° intermittierend gedreht wird um die Lippenformen an drei Stopp-Positionen zu stoppen, wobei, wenn der Behälter durch die Spritzstreckblasformmaschine (1) geformt wird, die Lippenformen an einer Spritzformeinheit (8), einer Streckblasformeinheit (9) und einer Auswerfeinheit (10) als die Stopp-Positionen stoppen, wobei die Spritzformeinheit (8) der Spritzstreckblasformmaschine (1) enthält: eine untere Form (11), welche eine Kavitätsform ist, die an einer Seite einer Spritzeinrichtung angeordnet ist, eine Heißkanaldüse (27) einer Heißkanaleinrichtung (19), die in der Formmaschine vorgesehen und derart angeordnet ist, dass sie zum Boden der unteren Form (11) zeigt; eine obere Form (12), welche in der vertikalen Richtung der Formmaschine aufwärts und abwärts bewegbar ist, wobei die oberen Form (12) eine Kernform ist, welche sich durch die in der Spritzformeinheit (8) angeordnete Lippenform (15) nach unten erstreckt, und eine Spritzform, welche mit der unteren Form (11) einen Vorformling-Formungsraum darin ausbildet, über welchem die Lippenform (5) liegt; und eine Klemmeinrichtung (13), welche die obere Form (12) und die untere Form (11), auf welcher die Lippenform (5), die sich an der oberen Form (12) vorbeibewegt, überlagert ist, klemmt, wobei das Verfahren umfasst: Einspritzen eines geschmolzenen Harzes in die Spritzform, welche durch die obere Form (12), die Lippenform (5), die sich in einer Position, die der Spritzformeinheit (8) durch eine Umdrehung der rotierenden Platte entspricht, befindet, und die untere Form (11), gebildet wird, um einen Vorformling (35) zu formen, Transferieren des Vorformlings (35), welcher in der Spritzformeinheit (8) geformt und durch die Lippenform (5) gehalten wird, zu der Streckblasformeinheit (9) durch eine Drehung der Rotationsplatte (6), und Formen des Containers in der Streckblasformeinheit (9) durch ein Strecken und Blasen des Vorformlings (35), und Transferieren des Behälters, der in der Streckblasformeinheit (9) geformt und durch die Lippenform (5) gehalten wird, zu der Auswerfeinheit (10) durch eine Drehung der Rotationsplatte (6), und ein Freigeben des Behälters aus der Lippenform (5) in der Auswerfeinheit (10), wobei die Spritzeinrichtung (20) mit der Heißkanaleinrichtung (19) der Spritzstreckblasformmaschine (1) verbunden und fixiert ist, wobei die Spritzeinrichtung (20) eine Einspritzoperation durchführt, wenn der hochgezählte Wert eines Timers einen vorgegebenen Zählwert erreicht, und dass der Timer einen Zähl-Startpunkt in einer jeden der Stufe des Drehens der Rotationsplatte (6), der Stufe des Stoppens der Rotationsplatte (6) und des Fixierens der Rotationsplatte (6) in einer nicht-drehbaren Weise, und in einer Stufe des Startens des Klemmens der oberen Form (12) und der unteren Form (11) setzt.

## Revendications

1. Procédé pour mouler un contenant à l'aide d'une machine de moulage par injection-soufflage avec étirage (1), la machine de moulage par injection-soufflage avec étirage (1) comportant : une plaque de serrage (14) qui est guidée par une colonne de presse (3) érigée sur une plaque de base inférieure (2) de sorte à être mobile vers le haut et vers le bas dans une direction verticale de la machine de moulage au-dessus de la plaque de base inférieure (2) ; une plaque de base intermédiaire (4) qui est guidée par la colonne de presse (3) de façon à être mobile vers le haut et vers le bas dans la direction verticale de la machine de moulage sous la plaque de serrage (14) ; une plaque rotative (6) qui est attachée sous la plaque de base intermédiaire (4) de manière à tourner librement, la plaque rotative (6) ayant une direction d'axe de rotation coïncidant avec la direction verticale de la machine de moulage, la plaque rotative (6) ayant un moule à rebord (5) pour former une portion d'ouverture du contenant dans chacune de trois directions sur une surface inférieure de celle-ci ; et un moteur d'entraînement rotatif (7) qui est disposé au niveau d'un centre d'un dessus de la plaque de base intermédiaire (4) et est amené à faire tourner par intermittence la plaque rotative tous les 120 degrés de façon à arrêter les moules à rebord au niveau de trois positions d'arrêt, dans lequel lorsqu'un contenant est moulé par la machine de moulage par injection-soufflage avec étirage dans laquelle les moules à rebord s'arrêtent au niveau d'une unité de moulage par injection (8), d'une unité de moulage par soufflage avec étirage (9), et d'une unité d'éjection (10) en tant que positions d'arrêt, l'unité de moulage par injection (8) de la machine de moulage par injection-soufflage avec étirage (1) comporte : un moule inférieur (11) qui est un moule à cavité disposé sur un côté d'un dispositif d'injection, une buse de canal chaud (27) d'un dispositif de canal chaud (19) installé dans la machine de moulage étant disposée de façon à faire face à un dessous du moule inférieur (11) ; un moule supérieur (12) qui est mobile vers le haut et vers le bas dans la direction verticale de la machine de moulage, le moule supérieur (12) étant un moule à noyau qui descend à travers le moule à rebord (5) situé dans l'unité de moulage par injection (8) et forme un moule d'injection ayant un espace de formation de préforme en son sein avec le moule inférieur (11) sur lequel le moule à rebord (5) est superposé ; et un dispositif de serrage (13) qui serre le moule supérieur (12) et le moule inférieur (11) sur lequel le moule à rebord (5) qui passe par le moule supérieur (12) est superposé, le procédé comprenant : l'injection d'une résine fondue dans le moule d'injection constitué du moule supérieur (12), du moule à rebord (5) situé dans une position correspondant à l'unité de moulage par injection (8) par une rotation de la plaque rotative, et du moule inférieur (11), pour mouler une préforme (35) ; le transfert de la préforme (35) qui est moulée dans l'unité de moulage par injection (8) et maintenue par le moule à rebord (5) vers l'unité de moulage par soufflage avec étirage (9) par la rotation de la plaque rotative (6), et le moulage d'un contenant dans l'unité de moulage par soufflage avec étirage (9) par étirage et soufflage de la préforme (35) ; et le transfert du contenant qui est moulé dans l'unité de moulage par soufflage avec étirage (9) et maintenu par le moule à rebord (5) vers l'unité d'éjection (10) par la rotation de la plaque rotative (6), et la libération du contenant du moule à rebord (5) dans l'unité d'éjection (10), dans lequel le dispositif d'injection (20) est relié et fixé au dispositif de canal chaud (19) de la machine de moulage par injection-soufflage avec étirage (1), le dispositif d'injection (20) réalisant une opération d'injection lorsqu'une valeur de compte progressif d'un minuteur a atteint une valeur de compte établie, et que le minuteur établit un point de départ de compte lors de l'un quelconque d'un stade de mise en rotation de la plaque rotative (6), d'un stade d'arrêt de la plaque rotative (6) et de fixation de la plaque rotative (6) de manière non rotative, et d'un stade de démarrage de serrage du moule supérieur (12) et du moule inférieur (11).
